**Europäisches Patentamt**

**European Patent Office**

**Office européen des brevets**

(19)

(11) Veröffentlichungsnummer: **0 143 223**
**B1**

(12)

# EUROPÄISCHE PATENTSCHRIFT

(45) Veröffentlichungstag der Patentschrift:
29.04.87

(51) Int. Cl.⁴: **C 25 D 1/10**, B 01 D 59/18

(21) Anmeldenummer: **84110780.8**

(22) Anmeldetag: **10.09.84**

(54) **Dopplerentformungsverfahren zur Herstellung von Trenndüsenstrukturen.**

(30) Priorität: **28.09.83 DE 3335171**

(43) Veröffentlichungstag der Anmeldung:
**05.06.85 Patentblatt 85/23**

(45) Bekanntmachung des Hinweises auf die Patenterteilung:
**29.04.87 Patentblatt 87/18**

(84) Benannte Vertragsstaaten:
**AT BE CH DE FR GB IT LI NL**

(56) Entgegenhaltungen:
**DE-A-2 933 570**
**FR-A-1 170 242**

(73) Patentinhaber: **Siemens Aktiengesellschaft Berlin und München, Wittelsbacherplatz 2, D-8000 München 2 (DE)**

(72) Erfinder: **Denk, Hans, Dr. rer. nat., Hauserstrasse 38 b, D-8035 Gauting (DE)**
Erfinder: **Wipfelder, Ernst, Dr. rer. nat., Lohensteinstrasse 10, d-8000 München 60 (DE)**
Erfinder: **Maier, Gerhard, Neubibergerstrasse 58, D-8011 Putzbrunn (DE)**

**Beschreibung**

Die Erfindung betrifft ein Verfahren zum Kopieren von Trenndüsenstruktureinheiten nach dem Oberbegriff des Anspruchs 1. Trenndüsenelemente dienen zur Trennung gas- oder dampfförmiger Gemische, insbesondere Isotopengemische.

Derzeit werden Trenndüsenstrukturen in Ätztechnik hergestellt. Dabei werden die Strukturen aus Metallfolien herausgeätzt. Mehrere hundert dieser strukturierten Folien werden zu einem Stapel vereint und durch Anbringen von Abschlußblechen mit den erforderlichen Gaszu- bzw. Gasableitungen zu einem funktionsfähigen Trenndüsenelement vervollständigt. Damit lassen sich Trennstrukturen erzielen, deren kleinste Spaltweiten $\geq$ 10 µm sind.

In der DE-OS 29 33 570 ist ein Kunststoffkopierverfahren für Trenndüsenstrukturen beschrieben. Dabei wird aus einem durch energiereiche Strahlung in seinen Eigenschaften veränderbaren platten- oder schichtförmigem Material durch partielles Bestrahlen und partielles Entfernen von Material unter Ausnützung der durch die Bestrahlung erzeugten unterschiedlichen Materialeigenschaften die Trennstrukturen enthaltende Negativ-Formen hergestellt. Diese Formen werden mit einem gegenüber dem zu trennenden Gemisch beständigen Material aufgefüllt, worauf das Material der Negativformen entfernt wird. Diese Verfahren erfordern jedoch noch ein aufwendiges Auflösen der Kunststoffnegativformschicht, um eine verwertbare Trennstruktur zu erhalten.

Die auf diese Weise hergestellten Trenndüsenelemente ermöglichen wegen ihrer extrem kleinen charakteristischen Abmessungen und des damit verbundenen relativ hohen Gasdrucks erhebliche Einsparungen bei den Anlagenkomponenten. Die Kosten für die Herstellung der Trenndüsenelemente selber sind jedoch verglichen mit den Kosten der übrigen Anlagenkomponenten noch relativ hoch.

Nach der DE-OS 3 206 820 ist es bekannt, zur Herstellung des Trennkörpers eine die Negative der Trennstrukturen enthaltende Formschicht zu erzeugen, die mit einem gegenüber dem zu trennenden Gemisch beständigen Struktur-Material aufgefüllt wird, worauf die Formschicht zu entfernen ist. Hierzu wird eine die Negative der Trennstrukturen enthaltende Formschicht durch Abformen eines die Positive der Trennstrukturen aufweisenden, wiederholt benutzbaren Werkzeugs auf einer Grundplatte erzeugt. Diese Grundplatte ist eine Trägerplatte (Substratplatte), die die Struktureinheiten räumlich zueinander fixiert.

Der vorliegenden Erfindung liegt die Aufgabe zugrunde, Trenndüsenstrukturen mit kleinen charakteristischen Abmessungen unter Wahrung der hohen Trennstruktur-Aspektverhältnisse mittels eines Kunststoffkopierverfahrens, das sich von DE-OS 3 206 820 unterscheidet, wirtschaftlich zu vervielfältigen.

Die Aufgabe wird gelöst durch die in den Kennzeichen der Patentansprüche dargelegten Maßnahmen. Der wesentliche Vorteil der Erfindung besteht darin, daß im Unterschied zur DE-OS 3 206 820 die Kunststoffnegativformschicht zerstörungsfrei entformt wird und für wiederholte galvanoplastische Abformungen erhalten bleibt. Technisch und wirtschaftlich vorteilhaft erweist sich das vorliegende Verfahren auch noch insofern, daß aufwendige und zeitraubende Löseprozesse, wie sie DE-OS 3 206 820 für das Entfernen der Kunststoffnegativformschicht beschreibt, entfallen.

Ausgehend von einem, die Positive der Trenndüsenstrukturen aufweisenden, wiederholt benutzbaren Werkzeug, erhalten zum Beispiel durch galvanische Metallabscheidung in eine lithographisch erzeugte Form, sind für die erfindungsgemäße Herstellung von Trenndüsenstrukturen nach dem Doppelentformungsverfahren folgende Verfahrensschritte durchzuführen:

1. Von diesem Werkzeug wird eine die Negative der Trenndüsenstruktur enthaltende Formschicht aus Kunststoff abgebildet, wobei diese Negativform auf einer elektrisch leitfähigen, werkzeugseitig mit einem dünnen Kunststofffilm beschichteten Substratplatte haftet und nach der Entformung aus dem Werkzeug die nun offenliegenden Bereiche des Kunststofilms entfernt werden, so daß diese Bereiche der Substratplatte frei von Kunststoffüberzügen, das heißt wieder elektrisch leitfähig werden.

2. Die Strukturspalte werden, beginnend von den kunststofffreien, elektrisch leitfähigen Bereichen der Substratplatte galvanisch mit Metall, zum Beispiel Nickel, aufgefüllt. Die Galvanik wird solange fortgesetzt, bis die Kunststoffnegativform von einer stabilen, zusammenhängenden, metallischen Deckschicht überzogen ist.

3. Die galvanisch erzeugte Deckschicht mit der die Positive der Trenndüsenstrukturen enthaltenden Formschicht wird von der auf der Substratplatte haftenden Kunststoffnegativform getrennt.

Durch dieses Doppelentformungsverfahren entfällt das aufwendige Herauslösen der Kunststoffnegativstrukturen aus der Metallpositivform, wie es zum Beispiel in der DE-OS 29 33 570 beschrieben ist.

Des weiteren steht nach der zweiten Entformung die Kunststoffnegativform erneut für die galvanoplastische Erzeugung einsatzfähiger Trenndüsenstrukturen zur Verfügung.

Die Erfindung wird anhand der Figuren an einem Ausführungsbeispiel erläutert. Es zeigen:

Figur 1 bis 10 die Verfahrensschritte zur LIGA (Lithographie-Galvanoplastik)-Kopiertechnik unter Anwendung einer Doppelentformungstechnik und

Figur 11 bis 15 die Vergußtechnik.

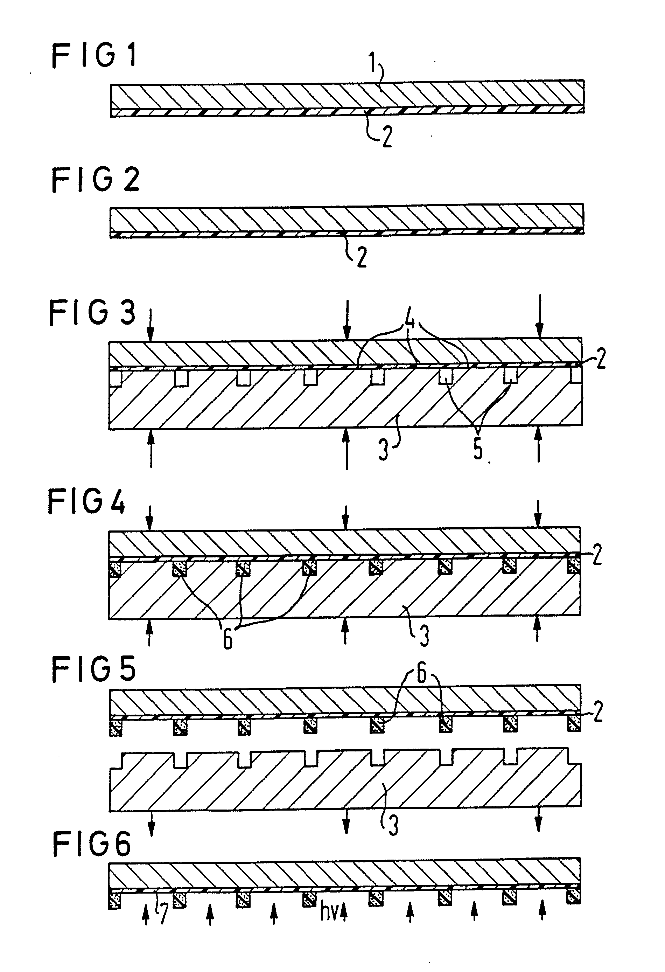

Die Figur 1 zeigt eine als Hilfselektrode 1 für die später durchzuführende Galvanik vorgesehene Substratplatte, vorzugsweise aus Nickel oder V2A-Stahl, auf die ein möglichst dünner, einheitlicher Fotolackfilm 2 aufgesprüht oder -geschleudert worden ist. Der Fotolack (Positivresist) wird bei mäßigen Temperaturen getrocknet. Die Schichtdicke des getrockneten Films (Figur 2) soll zwischen 2 und 10 μm liegen. Dazu ist es erforderlich, daß die Rauhtiefe der Substratplatte sowie der Kontaktflächen der abzuformenden Struktur kleiner als die halbe Filmdicke ist.

Aus der Figur 3 ist das Positionieren der Substratplatte zu ersehen. Die mit Fotolack beschichtete Substratplatte wird durch gleichmäßig über die Fläche verteilte Andruckkräfte so auf der abzuformenden Metallstruktur 3 fixiert, daß der Bereich der Kontaktflächen 4 gegen eindringendes Abformmaterial abgedichtet wird. Hohe Anpreßdrücke sind aber zu vermeiden, um die feinen Strukturen nicht zu gefährden.

Der Verguß mit flüssigem Kunststoff wird anhand der Figur 4 erläutert. Von der Metallpositivstruktur (Trenndüsenstruktur) 3, die als Gießform fungiert, wird eine Negativstruktur aus Kunststoff abgebildet. Geeignete Abformmaterialien sind Epoxid-, Silikon-, Polyurethan-, Polyester-, Polyacrylharze oder Mischungen daraus, oder schmelzbare Thermoplaste, Wachse oder Bitumen.

Zur Erniedrigung des thermischen Ausdehnungskoeffizienten des verfestigten Abformmaterials sowie zur Verbesserung der Formteiltrennung können dem Abformmaterial noch Füllstoffe zugesetzt werden. Geeignet sind dafür Carbonate, insbesondere Calciumcarbonate, Metalloxide z. B. Magnesiumoxid und Aluminiumoxid, Sulfate, pyrogone Kieselsäuren und Teflonpulver. Bewährt haben sich dabei Füllstoffe, deren maximale Korngröße kleiner als ein Drittel der kleinsten abzubildenden Strukturdicke ist.

Spezielle Beispiele dafür geeigneter Abformmassen sind:

1. Epoxidgießharzmasse, bestehend aus:.
a) 20 Masseteilen (MT) eines cycloaliphatischen Epoxidharzes, Epoxidequivalent 130 - 145;
b) 80 MT eines Epoxidharzes auf Bisphenol-A-Basis, Epoxidequivalent 400 - 500;
c) 41 MT eines carboxylgruppenhaltigen Flexibilisators;
d) 42 MT eines cycloaliphatischen Carbonsäureanhydrids, Säurezahl 630;
e) 0,5 MT eines Imidazolderivates und gegebenenfalls
f) 0,2 MT eines organisch modifizierten Silicons
g) 2 MT einer pyrogenen Kieselsäure.
Gemischt werden die Komponenten bei 60°C.
2. Epoxidgießharzmasse, bestehend aus:
a) 20 MT eines cycloaliphatischen Epoxidharzes, Epoxidequivalent 130 - 145:
b) 70 MT eines Epoxidharzes auf Basis eines hydrierten Bisphenol-A, Epoxidequivalent 210 - 230;
c) 10 MT eines epoxyfunktionellen Polysiloxans, Epoxidequivalent 370 - 420:
d) 56 MT eines carboxylgruppenhaltigen Flexibilisators;
e) 62 MT eines cycloaliphatischen Carbonsäureanhydrids, Säurezahl 630;
f) 0,5 MT eines Imidazolderivates.
Gemischt werden die Komponenten bei 60°C.

Die 60°C warme Gießharzmasse wird im Vakuum in das 80°C warme Werkzeug gefüllt. Das mit Gießharz gefüllte Werkzeug wird in einen auf 80°C erwärmten Druckbehälter übergeführt. Das Gießharz wird bei 80°C gehärtet, wobei bis über den Gelierpunkt hinaus ein Druck von etwa 3 bar aufrechterhalten wird.

Die Figur 5 zeigt die Entformung aus der Metallpositivstruktur (erste Entformung). Die auf der beschichteten Substratplatte (1) haftende Struktur aus Kunststoff (6) wird in der Warme (80°C) aus der Metallpositivstruktur (3) entformt. Dabei ist darauf zu achten, daß die Entformungskräfte senkrecht auf die zu trennenden Flächen und gleichmäßig darüber verteilt angreifen.

Der Figur 6 liegt das Belichten des Fotolacks zugrunde. Die nach dem Entfernen der Metallpositivstruktur freien Bereiche der mit Fotolack beschichteten Oberfläche der Substratplatte werden vorzugsweise mit ultraviolettem Licht bestrahlt.

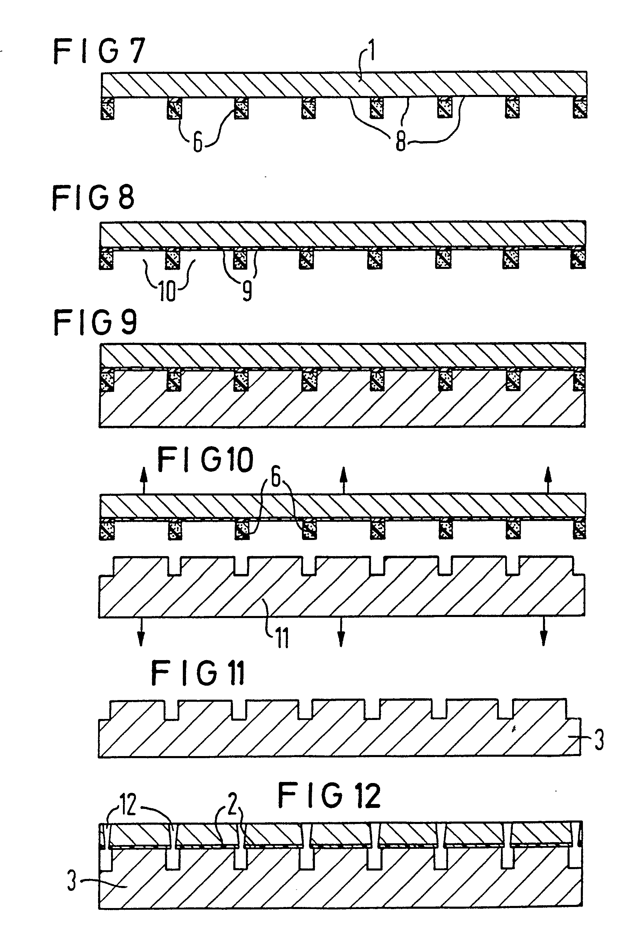

Darauf erfolgt das Ablösen des belichteten Fotolacks, dessen Ergebnis in der Figur 7 dargestellt ist. Mittels geeigneter Entwicklerlösungen werden die bestrahlten Fotolackschichten von der Substratplatte abgelöst, so daß an diesen Stellen blanke Metalloberflächen (8) erhalten werden.

Das Passivieren der blanken Metalloberflächen ist Gegenstand der Figur 8. Um die Haftung der Substratmetalloberflächen an dem galvanisch aufwachsenden Nickel zu reduzieren werden diese Flächen nach bekannten Verfahren passiviert. Die Passivierung ist mit dem Bezugszeichen (9) gekennzeichnet.

Wie aus der Figur 9 zu ersehen ist, wird, beginnend an den passivierten Oberflächenbereichen der Substratplatte, Nickel galvanisch abgeschieden, bis die Kavitäten der Kunststoffnegativform (10), Figur 8, aufgefüllt und mit einer geschlossenen, tragfähigen Nickelschicht überdeckt sind.

Die Trennung der Kunststoffnegativform von der galvanisch erzeugten Nickelstruktur (11) (zweite Entformung) zeigt Figur 10. Unter Einhaltung analoger Kriterien wie bei der ersten Entformung wird die galvanisch erzeugte Nickelstruktur (Positivform) von der Kunststoffnegativform getrennt. Die auf der Substratplatte haftende Struktur aus Kunststoff steht erneut für die Nickelgalvanoplastik zur Verfügung.

Zur Verdeutlichung der erfindungsgemäßen Doppelentformungstechnik zur Herstellung von Trenndüsenstrukturen werden die einzelnen Verfahrensschritte im folgenden näher beschrieben.

Die röntgenlithographisch aus einer Plexiglasplatte herausgearbeiteten Trenndüsennegativstrukturen werden - wie anhand der Figur 9 dargestellt - mit Nickel galvanoplastisch aufgefüllt. Um eine die Positive der Trennstrukturen aufweisende Formschicht aus Nickel zu erhalten, wird die die Negative der Trennstrukturen enthaltende Plexiglasformschicht mit Lösungsmitteln aus der Nickelgalvanoplastik herausgelöst.

Die so erhaltene Formschicht, die die Positive der Trennstrukturen mit charakteristischen Abmessungen von örtlichen Spaltweiten von zum Beispiel 3 µm und Strukturtiefen von 500 µm aufweist, dient als wiederholt benutzbares Werkzeug für die Kunststoffabformung. Wegen der sehr kleinen Abmessungen bzw. wegen dem großen Aspektverhältnis der Trennstrukturen sind für die Abformung Materialien erforderlich, die von einem dünnflüssigen in einen gummielastischen, bzw. festen auf dem Werkzeug nicht haftenden Zustand überführbar sind. Als Materialien dafür eignen sich: Reaktionsharze, niedrig schmelzende Thermoplaste, schmelzbare Stoffe wie zum Beispiel Wachse oder Bitumen.

Um ein vollständiges Auffüllen der Strukturspalte mit flüssigem Abformmaterial zu erreichen, erfolgt der Verguß vorzugsweise im Vakuum bei mäßigen oder höheren Temperaturen.

Für die Abformung der galvanoplastisch erzeugten Formschicht mit organischem Material haben sich folgende Varianten der Vergußtechnik (Figur 11 bis 15) bewährt:

1. Das die Positive der Trenndüsenstrukturen aufweisende Werkzeug (3), Figur 11, wird mit einer werkzeugseitig beschichteten Platte (Substratplatte) aus elektrisch leitfähigem Material abgedeckt. Die beschichtete Substratplatte ist mit Bohrungen (12), Figur 12, versehen, durch die die flüssige Abformmasse in das Werkzeug gefüllt wird. Zum Zweck einer zusätzlichen mechanischen Fixierung der Negativformschicht auf der Substratplatte sind die Bohrungen konisch ausgebildet. Diese mechanische Fixierung verhindert wirkungsvoll die Ablösung der Negativformschicht von der Substratplatte während der Entformung aus dem Werkzeug.

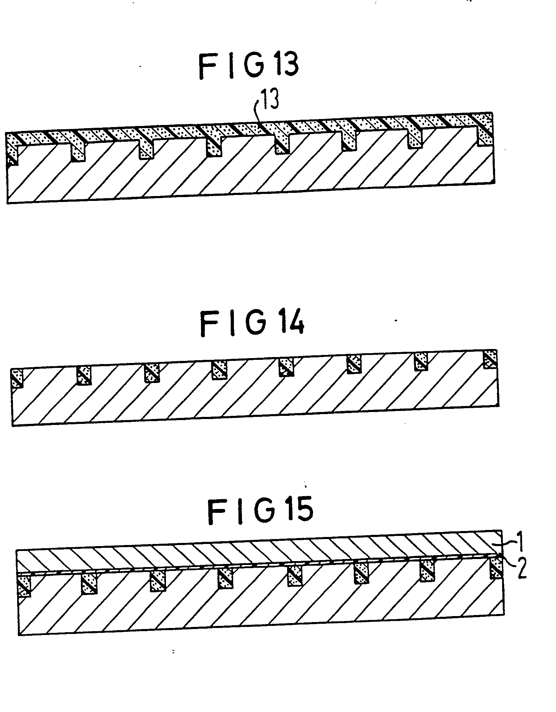

2. Das die Positive der Trenndüsenstrukturen aufweisende Werkzeug (3), Figur 13, wird mit Reaktionsharz (13) gefüllt und überschichtet. Das Reaktionsharz wird bei mäßigen Temperaturen in einen bei Raumtemperatur festen und klebfreien B-Zustand übergeführt. Die im B-Zustand befindliche Reaktionsharzmasse wird bis auf die Stirnflächen des Werkzeug plan abgefräst. Diese plane Fläche 13 wird mit einer kunststoffbeschichteten, elektrisch leitfähigen Substratplatte (1), Figur 15, abgedeckt. Das Werkzeug wird auf die für die Härtung der im B-Zustand befindlichen Reaktionsharzmasse erforderliche Temperatur gebracht. Dabei verbindet sich die Reaktionsharzformschicht mit der kunststoffbeschichteten Substratplatte. Nach erfolgter Härtung wird die auf der Substratplatte haftende Kunststoffnegativformschicht aus dem Werkzeug entformt.

3. Als Abformmasse wird ein bei Raumtemperatur festes Reaktionsharz verwendet, das bei mäßigen Temperaturen flüssig wird. Bei mäßigen Temperaturen wird das Werkzeug gefüllt und anschließend abgekühlt, damit das Harz wieder fest wird. Analog Variante 2 wird das bei Raumtemperatur feste Reaktionsharz bis auf die Werkzeugformschicht abgefräst. Diese Fläche wird mit einer planen, kunststoffbeschichteten Platte aus elektrisch leitfähigem Material abgedeckt. Während der Härtung bei höheren Temperaturen verbinden sich Reaktionsharz und beschichtete Substratplatte, so daß sich die auf der Substratplatte haftende Negativformschicht aus dem Werkzeug entformen läßt.

4. Das Werkzeug wird mit flüssigem Kunststoff gefüllt. Der Kunststoff wird bei mäßigen bis höheren Temperaturen ausgehärtet. Analog Variante 1 und 3 wird der gehärtete Kunststoff bis auf die Werkzeugformschicht abgefräst. Als Substratplatte wird ein elektrisch leitfähiges Material mit dünnem Kleberauftrag, der spiegelbildlich zur Trenndüsenstruktur strukturiert ist, verwendet. Bei gröberen Strukturen läßt sich der Kleber mittels Siebdruck auftragen. Durch das Härten der Kleberschicht verbinden sich Negativformschicht und Substratplatte, so daß die mit der Substratplatte verbundene Kunstharzformschicht aus dem Werkzeug zu entformen ist.

Als Substratmaterialien für die Negativformschicht, hergestellt nach einer der Varianten 1 bis 4, eignen sich: Metalle, Metallegierungen, metallkaschierte Kunststoffplatten, Graphit, Glaskohlenstoff, elektrisch leitende Kunststoffe.

Um das Eindringen der Abformmasse in die Bereiche der Berührungsflächen von Werkzeugformschicht und Substratplatte zu verhindern, wird die werkzeugseitige Oberfläche der Substratplatte mit einem dünnen Kunststofffilm (2) beschichtet, der mit der Abformmasse, mit der die Strukturspalte des Werkzeugs aufgefüllt werden, eine innige Verbindung eingeht und nach dem Trennen des Werkzeugs von der Kunststoffnegativform an den jetzt offenliegenden Bereichen des Kunststofffilms wieder abzulösen ist.

Insbesondere eignen sich dafür folgende Verfahren:

1. Die Substratplatte wird mit einem Positivfotolack beschichtet. Nach der Kunststoffabformung wird der Fotolack an den offenliegenden Bereichen der Formschicht belichtet und anschließend mit Lösungsmittel abgelöst, so daß an diesen Stellen elektrisch leitfähige Substratoberflächen erhalten werden.

2. Ein bei Raumtemperatur festes Epoxidharz wird in einem Verdünnungsmittel aufgelöst. Diese Harzlösung wird dünn auf die Substratplatte aufgetragen. Das Verdünnungsmittel wird bei mäßigen Temperaturen verflüchtigt. Die mit einem Festharzfilm überzogene Substratplatte wird formschlüssig an die Werkzeugformschicht gedrückt. Das solchermaßen bestückte Werkzeug wird mit Abformmasse gefüllt. Bei mäßigen bis höheren Temperaturen diffundiert ein Teil des Beschleunigers aus der Abformmasse in den bei diesen Temperaturen flüssigen Lackharzfilm, so daß zusammen mit der Härtung der Abformmasse auch der Lackfilm an der Stellen die mit der Abformmasse in Berührung kommen, aushärtet und und für eine feste Verbindung von Negativformschicht und Substratplatte sorgt. Nach der Entformung wird an den nun offenliegenden Flächen der Kunststoffnegativform die noch lösliche Lackharzschicht von der Substratplatte gelöst.

Bei der Entformung der auf der Substratplatte haftenden Kunststofformschicht aus dem Werkzeug ist darauf zu achten, daß die Abzugskräfte senkrecht auf die zu trennenden Flächen und gleichmäßig darüber verteilt angreifen. Entformt wird aus dem warmen Werkzeug.

Das galvanische Auffüllen der Kunststoffnegativformschicht mit Nickel, ausgehend von der elektrisch leitfähigen Substratplatte, erfolgt nach bekannten Verfahren (DE-OS 29 33 570). Um eine zerstörungsfreie Ablösung des galvanisch aufgewachsenen Nickels von der als Hilfselektrode fungierenden Substratplatte zu bewerkstelligen, wird diese nach bekannten Verfahren passiviert.

Unter Einhaltung analoger Kriterien wie bei der ersten Entformung wird die galvanisch erzeugte Nickelpositivformschicht, die ein originalgetreues Abbild des Ausgangswerkzeugs ist, aus der Kunststoffnegativformschicht entformt. Die auf der Substratplatte haftende Kunststofformschicht steht erneut für die Nickelgalvanoplastik zur Verfügung.

Eine weitere Variante für die zweite Entformung sieht vor, daß die Substratplatte bis auf die galvanisch erzeugte Nickelformschicht abgearbeitet wird. Die plangefräste Oberfläche wird mit einem Klebeband abgedeckt. Durch nachfolgendes Abziehen des Klebebandes wird die Kunststoffnegativformschicht aus der Nickelpositivformschicht entfernt.

Vorteile der Doppelentformungstechnik sind:

1. Vervielfältigung einer röntgenlithographisch hergestellten Urform, unabhängig von aufwendigen Bestrahlungseinrichtungen.

2. Aufwendiges und zeitraubendes Herauslösen der Kunststoffnegativformschicht entfällt.

3. Die zerstörungsfrei entformte Kunststoffnegativformschicht steht wiederholt für die Nickelgalvanoplastik zur Verfügung.

**Patentansprüche**

1. Verfahren zum Kopieren von Trenndüsenstrukturen für die Massenherstellung von Trenndüsenelementen mit einer als Urform (Werkzeug) dienenden Trenndüsenstruktureinheit, die wiederholt benutzbar und mit einer Vorrichtung zur Abdichtung des Werkzeuges versehenen Substratplatte ausgestattet ist, dadurch gekennzeichnet, daß für ein Doppelentformungsverfahren die elektrisch leitfähige Substratplatte (1, Figur 2) mit einem Kunststoffilm (2, Figur 2) versehen ist, daß durch Andrücken der beschichteten Substratplatte an das Werkzeug (Metallpositivform) (3, Figur 3) die Berührungsflächen des Werkzeugs mit der Substratplatte (4, Figur 3) abgedichtet werden, daß der Kunststoffilm (2, Figur 3) mit einem Kunststoff (6, Figur 4), mit dem die Strukturspalten (5, Figur 3) des Werkzeugs aufgefüllt werden, eine innige Verbindung eingeht, und daß nach dem Trennen (1. Entformung) des Werkzeugs vom Kunststoff (Kunststoffnegativform) die jetzt offenliegenden Bereiche des Kunststoffilms der Substratplatte (7) wieder entfernt werden und daß ausgehend von diesen leitfähigen Substratoberflächenbereichen (8, Figur 7), welche zur späteren Abtrennung der Metallpositivform (11, Figur 10) passiviert sind (9, Figur 8), die Kavitäten der Kunststoffnegativformschicht (10, Figur 8) in bekannter Weise galvanisch aufgefüllt werden und so lange galvanisiert wird, bis die Kunststoffnegativform mit einer geschlossenen, tragfähigen Leitschicht (11, Figur 9) überdeckt ist, und daß in einem zweiten Entformungsprozeß die so entstandene Metallpositivform (Kopie) (11, Figur 10) von der Kunststoffnegativform getrennt wird, und daß diese Kunststoffnegativform erneut für die galvanische Abformung verwendbar ist.

2. Verfahren nach Anspruch 1, dadurch gekennzeichnet, daß die werkzeugseitige Oberflache der Substratplatte mit einem bis zu mehreren μm dicken Kunststoffilm vorzugsweise 2 - 10 μm, bedeckt ist.

3. Verfahren nach den Ansprüchen 1 und 2, dadurch gekennzeichnet, daß der Kunststoffilm eine strahlungsintensive Positivlackschicht ist.

4. Verfahren nach den Ansprüchen 1 und 2, dadurch gekennzeichnet, daß der Kunststoffilm eine unbeschleunigte Epoxidharzschicht ist.

5. Verfahren nach den Ansprüchen 1 und 2, dadurch gekennzeichnet, daß der Kunststoffilm eine Phenoxyharzschicht ist.

6. Verfahren nach den Ansprüchen 1 und 2, dadurch gekennzeichnet, daß der Kunststoffilm eine Polyamidschicht ist.

7. Verfahren nach den Ansprüchen 1 bis 6, dadurch gekennzeichnet, daß bei der Überführung des flüssigen Kunststoffs (Abformmasse) für die zu bildende Negativform in den festen Zustand auch der noch lösliche Kunststoffilm der Substratplatte im Kontaktbereich des Kunststoffs der Negativform durch Eindiffundieren die Vernetzung bewirkender Stoffe in eine unlösliche und auf der Substratplatte haftende Schicht übergeführt wird.

8. Verfahren nach den Ansprüchen 1 bis 7, dadurch gekennzeichnet, daß als Abformmaterialien Stoffe verwendet werden, die von einem flüssigen, gießfähigen Zustand in einen elastischen, reißfesten Zustand überführbar sind, und eine innige Verbindung mit der beschichteten Substratplatte eingehen, und zwar insbesondere gießfähige Reaktionsharze, wie zum Beispiel Epoxid-, Silikon-, Polyurethan-, Polyester-, Polyacrylharze oder Mischungen daraus, oder schmelzbare Thermoplaste, Wachse oder Bitumen.

9. Verfahren nach den Ansprüchen 1 bis 8, dadurch gekennzeichnet, daß dem Abformmaterial Füllstoffe, wie Carbonate, Sulfate, Metalloxide, pyrogone Kieselsäuren und/oder Polytetrafluoräthylenpulver zugesetzt werden; wobei es zweckmäßig ist, daß die maximale Korngröße der Füllstoffe kleiner als ein Drittel der kleinsten abzubildenden Strukturdicke ist.

10. Verfahren nach den Ansprüchen 1 bis 6, dadurch gekennzeichnet, daß als Abformmaterial ein in einen B-Zustand überführbares Reaktionsharz oder ein bei Raumtemperatur festes Reaktionsharz verwendet wird, und die gefüllte Metallpositivform mit einer beschichteten Substratplatte abgedeckt wird.

11. Verfahren nach Anspruch 1, dadurch gekennzeichnet, daß als Material für die elektrisch leitende Substratplatte ein Metall, eine Metallegierung, Graphit, Glaskohlenstoff oder ein elektrisch leitender Kunststoff verwendet wird.

12. Verfahren nach den Ansprüchen 1 bis 8 und 10, dadurch gekennzeichnet, daß nach der 1. Entformung die jetzt offenliegenden Bereiche des Kunststoffilms der Substratplatte herausgelöst werden, so daß an diesen Stellen elektrisch leitende Oberflächen erhalten werden.

## Claims

1. A method of copying separation nozzle structures for the mass production of separation nozzle elements using a separation nozzle structure unit which serves as a master (tool) and which can be repeatedly used and is furnished with a device having a base plate for sealing the tool, characterised in that, for a double mould release process, the electrically-conductive base plate (1, Figure 2) is provided with a synthetic resin film (2, Figure 2); that by pressing the coated base plate against the tool (positive metal mould) (3, Figure 3), the touching surfaces of the tool are sealed by means of the base plate (4, Figure 3); that the synthetic resin film (2, Figure 3) enters into an internal bond with a synthetic resin (6, Figure 4) with which the structural gaps (5, Figure 3) of the tool are filled; and that, following separation (1st mould release) of the tool from the synthetic resin (negative synthetic resin mould), the regions of the synthetic resin film of the base plate (7) now exposed, are removed and that, starting from the conductive base surface regions (8, Figure 7), which for later separation of the positive metal mould (11, Figure 10) are passivated (9, Figure 8), the cavities of the synthetic resin negative mould layer (10, Figure 8) are electrically filled in known manner and electroplated until the synthetic resin negative mould is covered by a closed, conducting layer (11, Figure 9) which is capable of supporting a load; and that, in a second mould release process, the positive metal mould (copy) (11, Figure 10) produced in this manner is separated from the negative synthetic resin mould; and that said negative synthetic resin mould can be repeatedly used for electroforming.

2. A method as claimed in Claim 1, characterised in that the surface of the base plate at the tool side is covered with a synthetic resin film having a thickness of up to several µm, preferably 2 - 10 µm.

3. A method as claimed in Claims 1 and 2, characterised in that the synthetic resin film is a radiation-intensifiable positive lacquer layer.

4. A method as claimed in Claims 1 and 2, characterised in that the synthetic resin film is a non-accelerated epoxy resin layer.

5. A method as claimed in Claims 1 and 2, characterised in that the synthetic resin film is a phenoxy resin layer.

6. A method as claimed in Claims 1 and 2, characterised in that the synthetic resin film is a polyamide layer.

7. A method as claimed in Claims 1 to 6, characterised in that, during the conversion of the liquid synthetic resin (moulding compound) for the negative mould to be formed to the solid state even the still soluble synthetic resin film of the base plate is also converted in the contact region of the synthetic resin of the negative mould, into an insoluble layer which adheres to the base plate, by the diffusion in of substances which effect cross-linking.

8. A method as claimed in Claims 1 to 7, characterised in that substances are used as moulding materials which from a liquid pourable state can be converted into an elastic tear-resistant state and in each case forms an internal bond with the coated base plate, in particular, pourable reaction resins, such as epoxy, silicone, polyurethane, polyester, or polyacrylic resins, or mixtures thereof, or meltable thermoplastics, waxes or bitumen.

9. A method as claimed in Claims 1 to 8, characterised in that fillers, such as carbonates, sulphates, metal oxides, pyrogenic silicic acids and/or polytetrafluoroethylene powder, are added to the moulding material; where it is expedient that the maximum grain size of the fillers is smaller than one-third of the smallest thickness of the structure which is to be reproduced.

10. A method as claimed in Claims 1 to 6, <u>characterised in</u> that a reaction resin which can be converted into a B-state, or a reaction resin which is solid at room temperature, is used as a moulding material and the filled positive metal mould is covered with a coated base plate.

11. A method as claimed in Claim 1, <u>characterised in</u> that a metal, a metal alloy, graphite, vitreous carbon, or an electrically-conductive synthetic resin is used as material for the electrically-conductive base plate.

12. A method as claimed in Claims 1 to 8 and 10, <u>characterised in</u> that, after the first mould release, the regions of the synthetic film of the base plate now exposed are dissolved away, so that electrically-conductive surfaces are obtained at these places.

**Revendications**

1. Procédé de reproduction de structures de buse de séparation pour la fabrication de masse d'éléments de buse de séparation avec une unité de structure de buse de séparation servant de moule maître (outil), qui peut être utilisée répétitivement et qui est pourvue d'une plaque formant substrat munie d'un dispositif pour rendre l'outil étanche, caractérisé en ce qu'il consiste, pour un procédé de démoulage double, à munir la flaque formant substrat (1, figure 2) et conductrice de l'électricite d'une pellicule de matière plastique (2, figure 2), à rendre étanche la zone de contact (4, figure 3) de l'outil avec la plaque formant substrat, en appliquant la plaque formant substrat revêtue sur l'outil (moule métallique positif) (3, figure 3), à obtenir une liaison intime de la pellicule de matière plastique (2, figure 3) avec une matière plastique (6, figure 4) dont les fentes de la structure (5, figure 3) de l'outil sont emplies et, après avoir séparé (premier démoulage) l'outil de la matière plastique (moule négatif en matière plastique), à éliminer à nouveau de la plaque formant substrat (7) les régions de la pellicule de matière plastique qui sont maintenant découvertes et, à partir de ces régions superficielles du substrat (8, figure 7), qui sont conductrices et qui sont passivées (9, figure 8) pour la séparation ultérieure du moule positif en metal (11, figure 10), à remplir les cavités de la couche en matière plastique formant moule négatif (10, figure 8) par galvanoplastie, d'une manière en soi connue et à les revêtir par galvanoplastie jusqu'à ce que le moule négatif en matière plastique soit revêtu d'une couche conductrice (11, figure 9) fermée et résistante et, dans un second processus de démoulage, à séparer le moule positif en métal (copie) (11, figure 10) ainsi obtenu du moule négatif en matière plastique et à pouvoir réutiliser ce moule négatif en matière plastique pour le moulage par galvanoplastie.

2. Procédé suivant la revendication 1, caractérisé en ce qu'il consiste à recouvrir la surface supérieure de la plaque formant substrat se trouvant du côté de l'outil, d'une pellicule de matière plastique d'une épaisseur allant jusqu'à plusieurs microns et, de préférence, de 2 à 10 microns.

3. Procédé suivant la revendication 1 ou 2, caractérisé en ce que la pellicule de matière plastique est une couche de vernis positif sensible au rayonnement.

4. Procédé suivant la revendication 1 ou 2, caractérisé en ce que la pellicule de matière plastique est une couche de résine époxydique non accélérée.

5. Procédé suivant la revendication 1 ou 2, caractérisé en ce que la pellicule de matière plastique est une couche de résine phénoxy.

6. Procédé suivant la revendication 1 ou 2, caractérisé en ce que la pellicule de matière plast que est une couche de polyamide.

7. Procédé suivant les revendications 1 à 6, caractérisé en ce qu'il consiste, lors de la transformation de la matière plastique liquide (composition à mouler), pour le moule negatif qui se forme à l'état solide, à transformer aussi la pellicule de matière plastique encore soluble de la plaque formant substrat dans la région de contact de la matière plastique du moule négatif, en une couche insoluble et adhérant sur la plaque formant substrat par diffusion de substance provoquant la réticulation.

8. Procédé suivant les revendications 1 à 7, caractérisé en ce qu'il consiste à utiliser, comme matériau de moulage, des substances qui peuvent être transformées d'un état liquide susceptible d'être coulé, en un état élastique résistant à la traction et qui entre en un mélange intime avec la plaque revêtue formant substrat, et notamment des résines réactives susceptibles d'être coulées, comme par exemple des résines époxydiques, des résines de silicone, des résines de polyuréthanne, des résines de polyester, des résines polyacryliques ou leurs mélanges, ou des matières thermoplastiques fusibles, des cires ou du bitume.

9. Procédé suivant les revendications 1 à 8, caractérisé en ce qu'il consiste à ajouter à la matière à mouler des charges, comme des carbonates, des sulfates, des oxydes métalliques, des acides siliciques pyrogènes et/ou de la poudre de polytétrafluoroéthylène, la granulométrie maximale des charges étant avantageusement inférieure au tiers de la plus petite épaisseur de structure à former.

10. Procédé suivant les revendications 1 à 6, caractérisé en ce qu'il consiste à utiliser, comme matière à mouler, une résine réactive susceptible de passer à l'état B, ou une résine réactive solide à la température ambiante, et à recouvrir le moule positif métallique rempli d'une plaque revêtue formant substrat.

11. Procédé suivant la revendication 1, caractérisé en ce qu'il consiste à utiliser, comme matériau pour la plaque conductrice de l'électricité formant substrat, un métal, un alliage métallique, du graphite, des produits obtenus par décomposition thermique de produits aromatiques avec réticulation, ou une matière plastique conductrice de l'électricité.

12. Procédé suivant les revendications 1 à 8 et 10, caractérisé en ce qu'il consiste, après le premier démoulage, à éliminer les régions désormais dénudées de la pellicule de matière plastique de la plaque formant substrat de manière à obtenir, en ces emplacements, des surfaces conductrices de l'électricité.

FIG 1

FIG 2

FIG 3

FIG 4

FIG 5

FIG 6

FIG 7

FIG 8

FIG 9

FIG 10

FIG 11

FIG 12

## F I G 13

## F I G 14

## F I G 15